# EUROPÄISCHE PATENTSCHRIFT

(11) **EP 1 044 930 B1**
(45) Veröffentlichungstag und Bekanntmachung des Hinweises auf die Patenterteilung: **06.05.2004**
(21) Anmeldenummer: 00890073.0
(22) Anmeldetag: 14.03.2000
(51) Int. Cl.: C03B 33/07

(54) **Vorrichtung zum Teilen von Verbundglas**
Apparatus for cutting laminated glass
Appareil de coupe de verre laminé

(30) Priorität: 13.04.1999 AT 65099
(43) Veröffentlichungstag der Anmeldung: 18.10.2000
(73) Patentinhaber: Lisec, Peter, 3363 Amstetten-Hausmening (AT)
(72) Erfinder: Lisec, Peter, 3363 Amstetten-Hausmening (AT)
(74) Vertreter: Beer, Manfred, Dipl.-Ing.

(56) Entgegenhaltungen:
- EP-A- 0 691 311
- FR-A- 2 375 041
- FR-A- 2 386 494

## Beschreibung

Die Erfindung betrifft eine Vorrichtung zum Teilen von Verbundglas mit den Merkmalen des einleitenden Teils von Anspruch 1.

Vorrichtungen zum Teilen von Verbundglas sind beispielsweise aus der US-A-4,471,895 oder der US-A-5,704,959 bekannt.

Bei den bekannten Vorrichtungen zum Teilen von Verbundglas wird dieses beidseitig entlang der vorgesehenen Teilungslinie geritzt und dann zunächst zur einen und dann zur anderen Seite gebogen (gewölbt) oder geknickt, um den Bruch entlang der Ritzlinien zu öffnen. Dieses Biegen oder Knicken erfolgt bei bekannten Vorrichtungen durch Druckleisten oder Druckrollen oder aber dadurch, daß eine der Auflageflächen, auf welchen das zu teilende Verbundglas aufliegt, gegenüber der anderen Auflagefläche um eine parallel zu der Ritzlinie ausgerichtete Achse verschwenkt wird (US-A-5,704,959).

Da die Auflageflächen so groß sein müssen, daß Verbundglas ganzflächig abgestützt ist, stellen die Einrichtungen zum Verschwenken des einen Teils der Auflageflächen einen erheblichen mechanischen Aufwand dar.

Der Erfindung liegt die Aufgabe zugrunde, eine Vorrichtung der eingangs genannten Gattung anzugeben, mit der beidseitig geritztes Verbundglas mit geringerem Aufwand gebrochen werden kann.

Gelöst wird diese Aufgabe erfindungsgemäß durch die in Anspruch 1 genannten Merkmale.

Bevorzugte und vorteilhafte Ausführungen der erfindungsgemäßen Vorrichtung sind Gegenstand der Unteransprüche.

Bei der erfindungsgemäßen Vorrichtung ist es nicht mehr erforderlich, eine der beiden Auflageflächen gegenüber der anderen Auflagefläche zu verschwenken, um den Bruch in den Glasscheiben des Verbundglases (durch Knicken desselben) zu öffnen, sondern es werden lediglich die beiden Balken verschwenkt und zwar so, daß einmal die Verbundglasscheibe in der einen und dann in der anderen Richtung konvex gewölbt wird, so daß sich der auf der jeweils konvexen Seite des Verbundglases liegende Bruch entlang der vorher erzeugten Ritzlinie öffnet. Dabei bleiben die Auflageflächen und die auf ihnen liegenden Bereiche des Verbundglases unbewegt stehen, d.h. die Balken bewegen sich unabhängig von den Auflageflächen.

In einer bevorzugten Ausführungsform der erfindungsgemäßen Vorrichtung sind die Balken als Saugbalken ausgebildet, so daß das Verbundglas an den Balken durch Unterdruck festgehalten wird. So sind die bei den bekannten Vorrichtungen erforderlichen Klemmbalken, die mit großer Kraft von oben her gegen das Verbundglas gedrückt werden, entbehrlich.

Im Prinzip genügt es für die erfindungsgemäße Vorrichtung, wenn sie mit den beiden verschwenkbaren Balken ausgerüstet ist, wenn bereits geritztes Verbundglas auf die Vorrichtung gefördert wird. Es ist aber auch möglich, die Vorrichtung gemäß der Erfindung mit Einrichtungen zum Ritzen der beiden Glasscheiben des Verbundglases auszustatten.

In gleicher Weise kann die erfindungsgemäße Vorrichtung eine Einrichtung aufweisen, mit der die Kunststofffolie, die zwischen den beiden Glasscheiben des Verbundglases aufgenommen ist, nach dem Brechen entlang der Teilungslinie durchgetrennt werden kann. Solche Vorrichtungen können wie im Stand der Technik ausgebildet sein. Besonders bevorzugt ist es im Rahmen der Erfindung, wenn die Kunststofffolie durch Wärmeeinwirkung (Wärmestrahlung) abgeschmolzen wird, nachdem der Bruch geöffnet worden ist. Das Trennen der Folie kann im Rahmen der Erfindung auch mit Hilfe einer Klinge, die entlang des dann geöffneten Bruches verfährt und die Folie durchschneidet, erfolgen.

Besonders bevorzugt ist es, Wärmestrahlung mit einer Wellenlänge anzuwenden, die in verstärktem Ausmaß nur von der Kunststofffolie, nicht aber von den beiden Glasscheiben absorbiert wird, so daß sich nur die Kunststofffolie, nicht aber die beiden Glasscheiben erwärmen, wenn die Kunststofffolie abgeschmolzen wird.

Weitere Einzelheiten, Merkmale und Vorteile der erfindungsgemäßen Vorrichtung ergeben sich aus der nachstehenden Beschreibung des in den Zeichnungen weitestgehend schematisiert dargestellten Ausführungsbeispiels. Es zeigt:
Fig. 1 in Seitenansicht eine erfindungsgemäße Vorrichtung (teilweise) und die
Fig. 2 und 3 Schwenkstellungen der Balken beim Brechen der einen und der anderen Glasscheibe des Verbundglases.

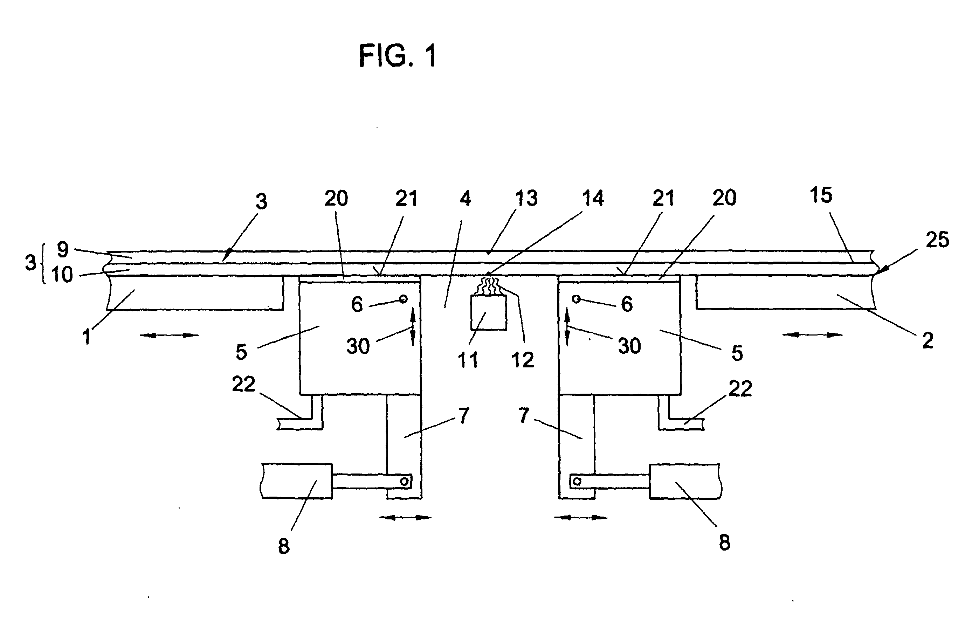

Eine in Fig. 1 gezeigte Vorrichtung besitzt in einem Maschinengestell montierte Auflageplatten 1 und 2, auf denen eine Verbundglasscheibe 3 aufliegt. In einem zwischen den Auflageplatten 1, 2 befindlichen Spalt 4 sind zwei Balken 5 vorgesehen, die um senkrecht zur Bildebene verlaufende Achsen 6 verschwenkbar sind. Hiezu sind die Balken 5 mit Hebeln 7 verbunden, an denen Druckmittelmotore 8 angreifen.

Zwischen den beiden Balken 5 können Einrichtungen zum Ritzen der beiden Glasscheiben 9, 10 der Verbundglasscheibe 3 vorgesehen sein. Diese Einrichtungen sind in der Zeichnung nicht dargestellt. Des weiteren kann im Bereich 4 zwischen den Balken 5 eine Einrichtung zum Durchtrennen der Kunststofffolie im Bereich eines hergestellten Bruches im Verbundglas, z.B. eine zwischen den Balken 5 verfahrbare Klinge oder eine Einrichtung 11 zum Abgeben von Wärmestrahlung 12 vorgesehen sein, wobei diese Einrichtung 11 Wärmestrahlung 12 mit einer Wellenlänge abgibt, die vom Glas 9, 10 der Verbundglasscheibe 3 nicht oder wenig von der Kunststofffolie 15 zwischen den beiden Glasscheiben 9, 10 der Verbundglasscheibe 3 aber stark absorbiert wird.

Die Balken 5 sind an ihrer Oberseite mit Auflagen 20 aus elastischem Werkstoff versehen, in denen Öffnungen vorgesehen sind, die zur Auflagefläche 21 der Balken 5 hin offen sind und die mit Unterdruck beaufschlagt werden können. Hiezu sind an den Balken 5 Leitungen 22 zum Anschluß an eine Unterdruckquelle vorgesehen.

Die Oberseiten beider Auflageplatten 1, 2 sind, wie im Stand der Technik bekannt, mit einer Filzauflage 25 ausgestattet und können mit Druckgas (vorzugsweise Druckluft) beaufschlagt werden, die durch Öffnungen in der der Verbundglasscheibe 3 zugekehrten Auflagefläche der Platten 1, 2 austritt, so daß für den Antransport und das Ausrichten einer Verbundglasscheibe 3 für das Teilen (Brechen) derselben die Auflageplatten 1, 2 als Luftkissentische wirken. Um das Festlegen der Verbundglasscheibe 3 während des Brechens zu unterstützen, können die in der Oberseite der Auflageplatten 1, 2 vorgesehenen Öffnungen, aus denen, wenn sie als Luftkissentische wirken, Druckgas austritt, mit Unterdruck beaufschlagt werden, so daß die Verbundglasscheibe 3 an die Platten 1, 2 angesaugt wird.

Dadurch, daß die Balken 5 als Saugbalken ausgebildet sind, wozu in den oberen Endflächen 21 der Auflagen 20 einander kreuzende Rippen und in jeder von einander kreuzenden Rippen eine Öffnung für das Wirksamwerden des Unterdruckes vorgesehen sein können, ausgebildet sind, sind Niederhaltebalken, welche die Verbundglasscheibe 3 gegen die Balken 5 drücken und die von oben her auf die Verbundglasscheibe 3 im Bereich der Balken 5 einwirken, entbehrlich.

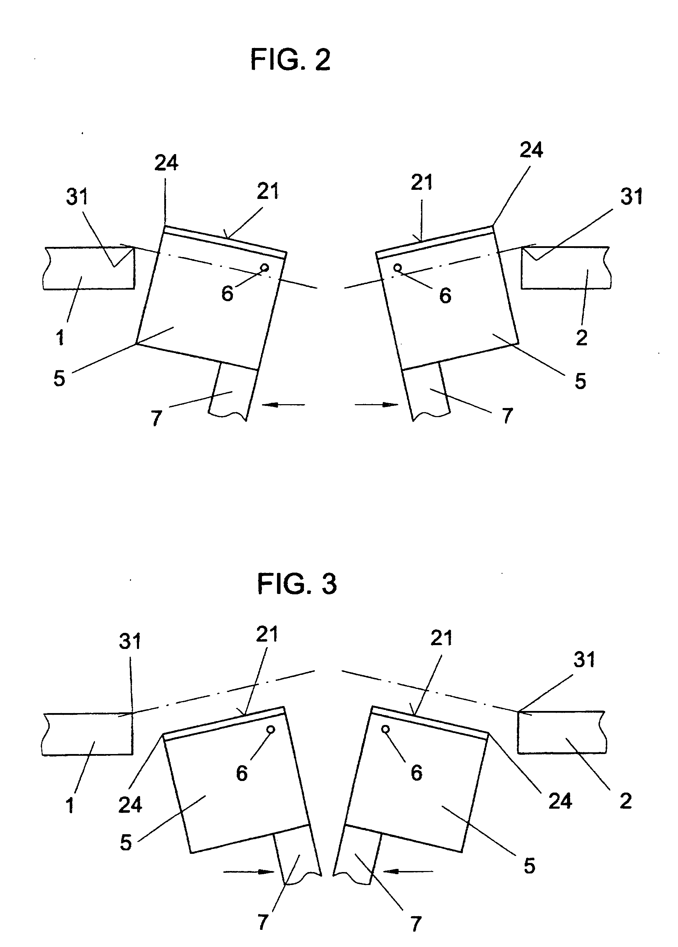

Zum Teilen von Verbundglas entlang vorher in diesem erzeugter Ritzlinien 13, 14 (in derselben Vorrichtung oder in einer vorgeschalteten Ritzvorrichtung) werden die Balken 5 einmal so wie in Fig. 2 gezeigt und dann so wie in Fig. 3 gezeigt, verschwenkt. (Es versteht sich, daß auf die Balken 5 zuerst auch so wie in Fig. 3 und dann in Fig. 2 gezeigt verschwenkt werden können). Durch das Verschwenken der Balken 5 wölbt sich die Verbundglasscheibe 3 im Bereich zwischen den Balken 5, so daß sich der Bruch in der auf der jeweils konvexen Seite der Verbundglasscheibe liegenden Ritzlinie 13, 14 öffnet.

Es ist anzumerken, daß das Verschwenken der beiden Balken in den Fig. 2 und 3 überhöht dargestellt ist. In der Regel genügt eine geringe Schwenkbewegung der Balken 5 um ihre Achsen 6, um den Bruch herbeizuführen. Dies ist ohne weiteres möglich, da die Auflagen 20 der Balken 5 und die Filzauflagen 25 der Auflageplatten 1, 2 elastisch verformbar sind, so daß das Wölben der Verbundglasscheibe 3 nach der einen und nach der anderen Seite ohne weiteres in dem Ausmaß möglich ist, daß sich der Bruch entlang der Ritzlinie 13 bzww. der Ritzlinie 14 öffnet.

Falls eine Verbundglasscheibe zu brechen ist, die dickere Glasscheiben besitzt und ein verstärktes Wölben erfordert, um die Brüche zu öffnen, kann zusätzlich vorgesehen sein, daß die Balken 5 wie in Fig. 1 durch die Doppelpfeile 30 angedeutet, auf- bzw. abverstellt werden. Bevorzugt wird dieses Verstellen in einem solchen Ausmaß durchgeführt, daß die oberen Flächen 21 der Auflagen 20 der Balken 5 beim Schwenken und während des Schwenkvorganges eine Lage einnehmen, die in den Fig. 2 und 3 durch strichpunktierte Linien angedeutet ist. Bevorzugt wird das Anheben bzw. Absenken der Balken 5 gleichzeitig mit deren Schwenkbewegung ausgeführt, so daß eine gedachte Verlängerung der Auflageflächen 21 jeweils durch die den Balken 5 zugekehrten, oberen Kanten 31 der Platten 1, 2 geht.

Dieses Anheben bzw. Absenken der Balken 5 ist wie gesagt nur bei dickerem Verbundglas 3 erforderlich, da Verbundglas 3 mit üblicher Stärke der beiden Glasscheiben 9, 10 schon erfolgreich in der erfindungsgemäßen Vorrichtung gebrochen werden kann, wenn die von den Achsen 6 abgekehrten Kanten 24 der Balken 5 gegenüber ihrer in Fig. 1 gezeigten Ruhestellung um wenige Zehntel Millimeter bis etwa 1 mm nach oben (Fig. 2) oder nach unten (Fig. 3) bewegt werden, indem die Balken 5 verschwenkt werden.

Nachdem die Brüche in beiden Glasscheiben 9, 10 wie beschrieben geöffnet worden sind, wird die Vorrichtung 11 zum Abgeben von Wärmestrahlen 12 zwecks Abschmelzen der Kunststofffolie 15 zwischen den Scheiben 9, 10 des Verbundglases 3 aktiviert und die Folie 15 im Bereich des Bruches abgeschmolzen, so daß der Teilungsvorgang beendet ist. Um dieses Abschmelzen zu unterstützen, können die beiden Auflageplatten 1, 2 auseinanderbewegt oder nur eine derselben von der anderen weg bewegt werden, so daß die Kunststofffolie 15 im Bereich des Bruches gespannt wird. Dieses Auseinanderbewegen kann auch so erfolgen, daß die Auflageplatten 1, 2 um eine zu ihren Flächen senkrecht stehende Achse, die im Bereich eines zur Teilungslinie senkrecht verlaufenden Randes der Auflageplatten 1, 2 angeordnet sind, verschwenkt werden, so daß die Verbundglasscheibe 3 an einem Ende der Teilungslinie stärker auseinandergezogen wird als am anderen (dies ist im Prinzip aus der US-A 5,704,959 bekannt).

Zusammenfassend kann ein bevorzugtes Ausführungsbeispiel der Erfindung wie folgt beschrieben werden:

Eine Vorrichtung zum Teilen von Verbundglas 3 besitzt zwei Auflagen für beidseitig geritztes 13, 14 Verbundglas 3 und in einem Spalt 4 zwischen diesen zwei als Saugbalken ausgebildete Balken 5. Die Balken 5 sind mit Hilfe von Antrieben 8 um parallel zur Teilungslinie liegende horizontale Achsen 6 verschwenkbar und zwar derart, daß das Verbundglas 3 einmal nach oben und dann nach unten gewölbt wird. Durch das Verschwenken der Balken 5 und das damit verbundene Wölben der Verbundglasscheibe 3 werden die Brüche in den beiden Glasscheiben 9, 10 entlang der vorher erzeugten Ritzlinien 13, 14 geöffnet, wobei sich jeweils die Ritzlinie 13 oder 14 öffnet, die auf der konvexen Seite der gewölbten Verbundglasscheibe 3 liegt. Zum Trennen der Kunststofffolie 15 zwischen den Glasscheiben 9, 10 des Verbundglases 3 wird eine Wärmestrahlungsquelle 11 verwendet, die sich vorzugsweise über die gesamte Breite der Vorrichtung erstreckt und die eine Wärmestrahlung 12 abgibt, die bevorzugt von der Kunststofffolie 15 absorbiert wird, nicht aber von den Glasscheiben 9, 10, so daß letztere beim Abschmelzen der Kunststofffolie 15 nicht wesentlich erwärmt werden.

## Patentansprüche

1. Vorrichtung zum Teilen von geritztem (13, 14) Verbundglas (3) mit zwei Auflageplatten (1, 2) und einer, zwischen diesen Platten (1, 2) angeordneten Einrichtung (5) zum Wölben des Verbundglases (3) im Bereich der Ritzlinien (13, 14), **dadurch gekennzeichnet, daß** die Einrichtung zum Wölben des Verbundglases (3) zwei zwischen den einander zugekehrten Rändern (31) der Auflageplatten (1, 2) vorgesehene Balken (5) sind, die unabhängig von den beim Brechen des Verbundglases (3) stillstehenden Auflageplatten (1, 2) um horizontale Achsen (6) verschwenkbar sind.

2. Vorrichtung nach Anspruch 1, **dadurch gekennzeichnet, daß** die Schwenkachsen (6) der Balken (5) im Bereich ihrer oberen, einander benachbarten Kanten angeordnet sind.

3. Vorrichtung nach Anspruch 1 oder 2, **dadurch gekennzeichnet, daß** die Balken (5) als Saugbalken ausgebildet sind.

4. Vorrichtung nach einem der Ansprüche 1 bis 3, **dadurch gekennzeichnet, daß** die Balken (5) auf ihrer der Verbundglasscheibe (3) anzulegenden Seite (21) eine Auflage (20) aus elastischem Werkstoff tragen, der mit Öffnungen versehen ist, die mit Unterdruck (22) beaufschlagt werden können.

5. Vorrichtung nach Anspruche 4, **dadurch gekennzeichnet, daß** die Auflagen (20) auf ihrer der Verbundglasscheibe (3) zugekehrten Oberseite (21) mit einander kreuzenden Rippen versehen sind.

6. Vorrichtung nach einem der Ansprüche 1 bis 5, **dadurch gekennzeichnet, daß** die Balken (5) während des Verschwenkens in der Richtung senkrecht zu den Auflageplatten (1, 2) verstellbar sind (Pfeile 30).

7. Vorrichtung nach einem der Ansprüche 1 bis 6, **dadurch gekennzeichnet, daß** die Einrichtungen (7, 8) zum Verschwenken der Balken (5) für ein gemeinsamens Verschwenken der Balken (5) in entgegengesetzte Schwenkrichtungen ausgelegt sind.

8. Vorrichtung nach einem der Ansprüche 1 bis 7, **dadurch gekennzeichnet, daß** zwischen den Balken (5) eine an sich bekannte, bevorzugterweise langgestreckte, Wärmestrahlungsquelle (11) vorgesehen ist, die Wärmestrahlung (12) abgibt, die bevorzugt von der Kunststofffolie (15) zwischen den Glasscheiben (9, 10) des Verbundglases (3), nicht aber von den Glasscheiben (9, 10) des Verbundglases (3), absorbiert wird.

9. Vorrichtung nach einem der Ansprüche 1 bis 7, **dadurch gekennzeichnet, daß** zum Durchtrennen der zwischen den Glasscheiben (9, 10) des Verbundglases (3) vorgesehenen Folie (15) eine zwischen den Balken (5) verfahrbare Klinge vorgesehen ist.

## Claims

1. Apparatus for breaking scored (13; 14) composite glass (3) with two supporting plates (1, 2) and a means (5) disposed between these plates (1,2) for bending the composite glass (3) in the region of the score lines (13, 14), **characterised in that** the means for bending the composite glass (3) are two beams (5) provided between facing edges (31) of the supporting plates (1, 2), said beams being capable of swivelling around horizontal axes (6) independently of the supporting plates (1, 2), which are stationary during breaking of the composite glass (3).

2. Apparatus according to Claim 1, **characterised in that** the swivel axes (6) of the beams (5) are disposed in the region of their upper adjacent edges.

3. Apparatus according to Claim 1 or 2, **characterised in that** the beams (5) are configured as suction beams.

4. Apparatus according to one of Claims 1 to 3, **characterised in that** on their side (21) to be laid against the sheet of composite glass (3), the beams (5) have a support (20) made of elastic material, which is provided with openings, which can be subjected to underpressure (22).

5. Apparatus according to Claim 4, **characterised in that** on their upper side (21) facing the sheet of composite glass (3), the supports (20) are provided with intersecting ribs.

6. Apparatus according to one of Claims 1 to 5, **characterised in that** the beams (5) are displaceable in the direction perpendicular to the supporting plates (1, 2) during swivelling (arrow 30).

7. Apparatus according to one of Claims 1 to 6, **characterised in that** the means (7, 8) for swivelling the beams (5) are designed for swivelling of the beams (5) jointly in opposite swivelling directions.

8. Apparatus according to one of Claims 1 to 7, **characterised in that** between the beams (5) a preferably elongated thermal radiation source (11) known per se is provided, which emits thermal radiation (12), which is preferably absorbed by the plastic film (15) between the glass sheets (9, 10) of the composite glass (3), but not absorbed by the glass sheets (9, 10) of the composite glass (3).

9. Apparatus according to one of Claims 1 to 7, **characterised in that** a blade, which is movable between the beams (5), is provided for cutting through the film (15) provided between the glass sheets (9, 10) of the composite glass (3).

## Revendications

1. Dispositif pour couper du verre stratifié (3) rayé (13, 14), comportant deux plaques de support (1, 2) et, disposé entre lesdites plaques de support (1, 2), un mécanisme (5) pour plier le verre stratifié (3) dans la région des lignes de rayage (13, 14), **caractérisé par le fait que** le mécanisme pour plier le verre stratifié (3) est formé de deux poutres (5) qui sont placées entre les bords (31) en vis-à-vis des plaques de support (1, 2) et peuvent pivoter autour d'axes horizontaux (6), de manière indépendante des plaques de support (1, 2) qui restent fixes pendant la coupe du verre.

2. Dispositif selon la revendication 1, **caractérisé par le fait que** les axes de pivotement (6) des poutres (5) sont disposés dans la région de leurs bords supérieurs mutuellement voisins.

3. Dispositif selon la revendication 1 ou 2, **caractérisé par le fait que** les poutres (5) sont agencées en poutres à ventouse.

4. Dispositif selon une des revendications 1 à 3, **caractérisé par le fait que** les poutres (5), sur leur face (21) s'appliquant sur le verre stratifié (3), portent une garniture (20) en un matériau élastique, qui est pourvue d'ouvertures auxquelles une dépression (22) peut être appliquée.

5. Dispositif selon la revendication 4, **caractérisé par le fait que** les garnitures (20), sur leur face supérieure (21) tournée vers le verre stratifié (3), sont pourvues de nervures croisées.

6. Dispositif selon une des revendications 1 à 5, **caractérisé par le fait que** les poutres (5), pendant le pivotement, peuvent être déplacées dans la direction perpendiculaire aux plaques de support (1, 2) (flèche 30).

7. Dispositif selon une des revendications 1 à 6, **caractérisé par le fait que** les mécanismes (7, 8) pour faire pivoter les poutres (5) sont conçus pour assurer un pivotement conjoint des poutres (5) dans des directions de pivotement opposées.

8. Dispositif selon une des revendications 1 à 7, **caractérisé par le fait qu'**il est prévu entre les poutres (5) une source de chaleur rayonnante (11) connue en soi, qui fournit un rayonnement thermique (12) qui est absorbé de manière préférentielle par le film de matière plastique(15) placé entre les feuilles de verre (9, 10) du verre stratifié (3) mais pas par les feuilles de verre (9, 10) du verre stratifié (3).

9. Dispositif selon une des revendications 1 à 7, **caractérisé par le fait qu'**il est prévu pour couper le film (15) entre les feuilles de verre (9, 10) du verre stratifié (3), une lame qui peut être déplacée entre les poutres (5).
